# EUROPEAN PATENT APPLICATION

(11) **EP 4 311 308 A1**
(43) Date of publication of application: **24.01.2024**
(21) Application number: 22794321.4
(22) Date of filing: 01.03.2022
(51) Int. Cl.: H04W 36/00, H04W 24/02

(54) **MOBILITY PERFORMANCE OPTIMIZATION METHOD AND COMMUNICATION APPARATUS**

(30) Priority: 28.04.2021 CN 202110466874
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: Huawei European IPR
(86) International application number: PCT/CN2022/078572
(87) International publication number: WO 2022/227841

(57) **Abstract**

This application provides a mobility performance optimization method and a communication apparatus. The method includes: receiving indication information from a second network device, where the indication information indicates a terminal device to generate a successful handover report SHR based on handover from a first cell of a first network device to a second cell of the second network device; storing context information of the terminal device on the first network device based on the indication information; receiving the SHR from a third network device, where the third network device is a network device connected to the terminal device when the terminal device sends the SHR; and optimizing mobility performance based on the context information of the terminal device on the first network device and the SHR. According to the foregoing method, when there is an underlying issue in a successful handover procedure, related mobility performance optimization can still be ensured.

## Description

This application claims priority to Chinese Patent Application No. 202110466874.6, filed with the China National Intellectual Property Administration on April 28, 2021 and entitled "MOBILITY PERFORMANCE OPTIMIZATION METHOD AND COMMUNICATION APPARATUS", which is incorporated herein by reference in its entirety.

### TECHNICAL FIELD

This application relates to the field of communication technologies, and in particular, to a method for optimizing a mobility parameter in a successful handover (successful handover) scenario and a communication apparatus.

### BACKGROUND

An indicator of a wireless communication system is to ensure that a terminal device can enjoy an uninterrupted service in a moving process, and a corresponding scenario is a mobility scenario. In view this, mobility management is a hot research topic in the wireless communication system.

The mobility scenario includes a handover scenario. When handover fails, a terminal may send a radio link failure report (radio link failure report, RLC report) to a network side, so that the network side obtains a handover failure cause and optimizes mobility performance.

Even in a scenario of successful handover, there is still an underlying issue (underlying issue) in successful handover. If the mobility performance cannot be optimized based on the issue, a subsequent related handover procedure may fail. Therefore, how to optimize the mobility performance in such a scenario is an urgent problem to be resolved.

### SUMMARY

Embodiments of this application provide a technical solution of mobility performance optimization, to optimize related mobility performance when a terminal device detects an underlying issue in successful handover.

Embodiments of this application may be specifically implemented by using the following technical solutions.

According to a first aspect, this application provides a mobility performance optimization method, including: A second network device receives first indication information from a terminal device, where the first indication information indicates that the terminal device generates an SHR based on handover from a first cell of a first network device to a second cell of the second network device. The first network device receives second indication information from the second network device, where the second indication information indicates the terminal device to generate the SHR based on the handover from the first cell to the second cell. The first network device stores context information of the terminal device on the first network device based on the second indication information. The first network device receives the SHR from a third network device, where the third network device is a network device connected to the terminal device when the terminal device sends the SHR. The first network device optimizes mobility performance based on the context information of the terminal device on the first network device and the SHR.

The second network device, that is, a target network device, sends an indication to the first network device, that is, a source network device in time when receiving an indication that the terminal device generates the SHR in current handover, so that the first network device can store the context information of the terminal device on the first network device in time, and combine the context information and the SHR to optimize the mobility performance after receiving the SHR subsequently. Therefore, mobility performance of a communication system is improved. In addition, storing is directly performed on a first network device side, so that unnecessary signaling overheads can be effectively reduced.

According to a second aspect, this application provides another mobility performance optimization method, including: A first network device sends context information of a terminal device on the first network device to a second network device. The second network device stores the context information of the terminal device on the first network device. The first network device receives an SHR from a third network device, where the SHR is generated by the terminal device based on handover from a first cell of the first network device to a second cell of the second network device, and the third network device is a network device connected to the terminal device when the terminal device sends the SHR. The first network device sends request information to the second network device, where the request information requests the context information of the terminal device on the first network device. Feedback information is received from the second network device, where the feedback information is used to feed back the context information of the terminal device on the first network device. The first network device optimizes mobility performance based on the context information of the terminal device on the first network device and the SHR.

A network device 2 stores context information of the terminal device on a source network device, and subsequently sends the context information to the source network device for mobility performance optimization for an underlying issue in successful handover.

In an implementation, the method further includes: The first network device receives handover success information from the second network device, where the handover success information indicates that the terminal device is successfully handed over to the second cell.

In a conditional handover scenario, it needs to be ensured that the first network device, namely, the source network device, can send the context information of the terminal device on the first network device to the second network device, namely, the target network device, that is finally accessed by the terminal device.

In an implementation, the request information includes information about the terminal device.

In an implementation, the request information further includes at least one of information about the first network device, information about the second cell, and time information of a handover procedure.

The foregoing information can help quickly locate the context information that is of the terminal device on the first network device and that is requested by the first network device.

With reference to the first aspect or the second aspect and the implementations of the second aspect, in a possible implementation, the context information of the terminal device on the first network device includes mobility configuration information related to the terminal device.

In a possible implementation, the mobility configuration information includes at least one of handover threshold information, handover resource information, handover offset information, and hysteresis information; or the mobility configuration information includes conditional handover configuration information.

In a possible implementation, the conditional handover configuration information includes conditional handover candidate cell information and conditional handover trigger condition information.

In a possible implementation, the SHR includes the information about the first network device. In this way, the third network device that receives the SHR can quickly find the first network device to forward the SHR.

In a possible implementation, the third network device and the second network device are a same network device.

In this case, the method further includes: The second network device receives the SHR from the terminal device, and sends the SHR to the first network device.

In a possible implementation, the mobility configuration information includes at least one of resource information used by the terminal device to access the second cell, a maximum quantity of random access attempts that is configured, and a handover threshold, and the SHR includes a quantity of random access attempts of the terminal device to access the second cell. Optimizing mobility performance based on the context information of the terminal device on the first network device and the SHR includes: determining, based on the quantity of random access attempts, to adjust at least one of the following: an allocated resource for accessing the cell, the maximum quantity of random access attempts that is configured, and the handover threshold.

In a possible implementation, the handover threshold information includes the handover threshold of accessing the second cell by the terminal device, and the SHR includes channel quality information of the second cell obtained after the terminal device accesses the second cell. Optimizing mobility performance based on the context information of the terminal device on the first network device and the SHR includes: determining to adjust the handover threshold based on the channel quality information of the second cell.

According to a third aspect, this application provides a communication apparatus. The communication apparatus has a function of the first network device, the second network device, the terminal device, or the third network device in the first aspect and the possible implementations of the first aspect. The function may be implemented by hardware, or may be implemented by hardware by executing corresponding software. The hardware or the software includes one or more modules corresponding to the foregoing function.

According to a fourth aspect, this application provides a communication apparatus. The communication apparatus has a function of the first network device, the second network device, the terminal device, or the third network device in the second aspect and the possible implementations of the second aspect. The function may be implemented by hardware, or may be implemented by hardware by executing corresponding software. The hardware or the software includes one or more modules corresponding to the foregoing function.

According to a fifth aspect, this application provides a communication apparatus, including a processor and a memory. The memory is configured to store a computer program, and the processor is configured to invoke the computer program from the memory and run the computer program, to enable the communication apparatus to implement a function of the first network device, the second network device, the terminal device, or the third network device in the first aspect and the possible implementations of the first aspect.

According to a sixth aspect, this application provides a communication apparatus, including a processor and a memory. The memory is configured to store a computer program, and the processor is configured to invoke the computer program from the memory and run the computer program, to enable the communication apparatus to implement a function of the first network device, the second network device, the terminal device, or the third network device in the second aspect and the possible implementations of the second aspect.

According to a seventh aspect, a computer program product is provided. The computer program product includes computer program code, and when the computer program code is run on a computer, the computer is enabled to perform the method in the foregoing aspects.

According to an eighth aspect, a computer-readable medium is provided. The computer-readable medium stores program code, and when the computer program code is run on a computer, the computer is enabled to perform the method in the foregoing aspects.

For beneficial effects of the third aspect to the eighth aspect, respectively refer to the corresponding beneficial effects in the first aspect and the second aspect. Because the beneficial effects have been described above, details are not described herein again.

### BRIEF DESCRIPTION OF DRAWINGS

FIG. 1 is an application scenario according to an embodiment of this application;
FIG. 2 is an interaction flowchart of a mobility performance optimization method according to an embodiment of this application;
FIG. 3 is an interaction flowchart of another mobility performance optimization method according to an embodiment of this application;
FIG. 4 is an interaction flowchart of still another mobility performance optimization method according to an embodiment of this application;
FIG. 5 is an interaction flowchart of yet another mobility performance optimization method according to an embodiment of this application;
FIG. 6 is an interaction flowchart of still yet another mobility performance optimization method according to an embodiment of this application;
FIG. 7 is a schematic diagram of a communication apparatus according to an embodiment of this application; and
FIG. 8 is a schematic diagram of another communication apparatus according to an embodiment of this application.

### DESCRIPTION OF EMBODIMENTS

In embodiments of this application, "at least one" means one or more, and "a plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one (piece) of a, b, or c may indicate a, b, c, a and b, a and c, b and c, or a, b, and c, where each of a, b, and c may be an element, or may be a set including one or more elements.

In embodiments of this application, "for example", "in some embodiments", "in another embodiment", "in an implementation", or the like is used to represent giving an example, an illustration, or descriptions. Any embodiment or design scheme described as an "example" in this application should not be explained as being more preferred or having more advantages than another embodiment or design scheme. Exactly, the term "example" is used to present a concept in a specific manner.

In embodiments of this application, communication and transmission may be interchangeably used sometimes. It should be noted that meanings expressed by the terms are consistent when differences are not emphasized. For example, transmission may include sending and/or receiving, and may be in a noun form or a verb form.

It should be noted that, in embodiments of this application, terms such as "first" and "second" are only used for a purpose of distinction in description, and should not be understood as an indication or implication of relative importance or an indication or implication of a sequence. In embodiments of this application, "equal to" may be used together with "greater than", and this is applicable to a technical solution used when "greater than" is used; or "equal to" may be used together with "less than", and this is applicable to a technical solution used when "less than" is used. It should be noted that, when "equal to" is used together with "greater than", "equal to" is not used together with "less than", or when "equal to" is used together with "less than", "equal to" is not used together with "greater than".

In the following, some terms of embodiments of this application are described, to help a person skilled in the art have a better understanding.
1. Terminal device In embodiments of this application, the terminal device is a device having a wireless transceiver function, and may be referred to as a terminal (terminal), user equipment (user equipment, UE), a mobile station (mobile station, MS), a mobile terminal (mobile terminal, MT), an access terminal device, an in-vehicle terminal device, an industrial control terminal device, a UE unit, a UE station, a remote station, a remote terminal device, a mobile device, a UE terminal device, a wireless communication device, a UE agent, a UE apparatus, or the like. The terminal device may be fixed or movable. It should be noted that the terminal device may support at least one wireless communication technology such as LTE, NR, or wideband code division multiple access (wideband code division multiple access, WCDMA). For example, the terminal device may be a mobile phone (mobile phone), a pad (pad), a desktop computer, a notebook computer, an all-in-one computer, an in-vehicle terminal, a virtual reality (virtual reality, VR) terminal device, an augmented reality (augmented reality, AR) terminal device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a future mobile communication network, a terminal device in a future evolved public land mobile network (public land mobile network, PLMN), or the like. In some embodiments of this application, the terminal may alternatively be an apparatus having a receiving and sending function, for example, a chip system. The chip system may include a chip, and may further include another discrete component.
2. Network device In embodiments of this application, the network device is a device that provides a wireless communication function for the terminal device, and may also be referred to as an access network device, a radio access network (radio access network, RAN) device, or the like. For example, the network device includes but is not limited to: a next-generation NodeB (generation NodeB, gNB) in a fifth-generation (5th-generation, 5G) mobile communication system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a mobile switching center, and the like. The network device may alternatively be a radio controller, a central unit (central unit, CU), and/or a distributed unit (distributed unit, DU) in a cloud radio access network (cloud radio access network, CRAN) scenario. Alternatively, the network device may be a relay station, an access point, an in-vehicle device, a terminal device, a wearable device, a network device in future mobile communication, a network device in a future evolved PLMN, or the like. In some embodiments, the network device may alternatively be an apparatus, for example, a chip system, that provides a wireless communication function for the terminal device. For example, the chip system may include a chip, and may further include another discrete component.
3. Handover

From a perspective of a connection scenario, handover scenarios in embodiments of this application may be classified into handover of the terminal device from a cell of a source network device to a cell of a target network device in a single-connection scenario and handover of the terminal device from a primary serving cell of a source primary network device to a primary serving cell of a target primary network device in a multi-connection scenario. From a perspective of a handover scenario, the handover may be classified into common handover, conditional handover (conditional handover, CHO), and dual active protocol stack (dual active protocol stack, DAPS) handover. The common handover is a process in which the terminal device receives a configuration delivered by the source network device, completes reconfiguration on the target network device, accesses a target base station, and disconnects from the source network device. The conditional handover means that a network device sends CHO configuration information to the terminal device, where the CHO configuration information includes candidate cell information for handover, corresponding conditional handover trigger condition information, and the like. After receiving a CHO configuration, the terminal device does not immediately perform a handover procedure, but waits until a candidate cell that meets a conditional handover trigger condition exists in candidate cells, and starts to perform the handover procedure to the candidate cell. The DAPS handover means that after receiving a handover command, the terminal device still maintains a connection to the source network device, and attempts to establish a connection to the target network device. Therefore, it may be considered that, in a DAPS handover scenario, the terminal device establishes a connection to the source network device and the target network device separately until the target network device indicates the terminal device to disconnect from the source network device. From a perspective of a procedure, the handover may be classified into Xn-based handover (Xn-based handover) and NG-based handover (NG-based handover). In the Xn-based handover, the source network device and the target network device exchange a handover request. In the NG-based handover, the source network device sends the handover request to an authentication management field (authentication management field, AMF), and then the AMF sends a handover command to the target network device.

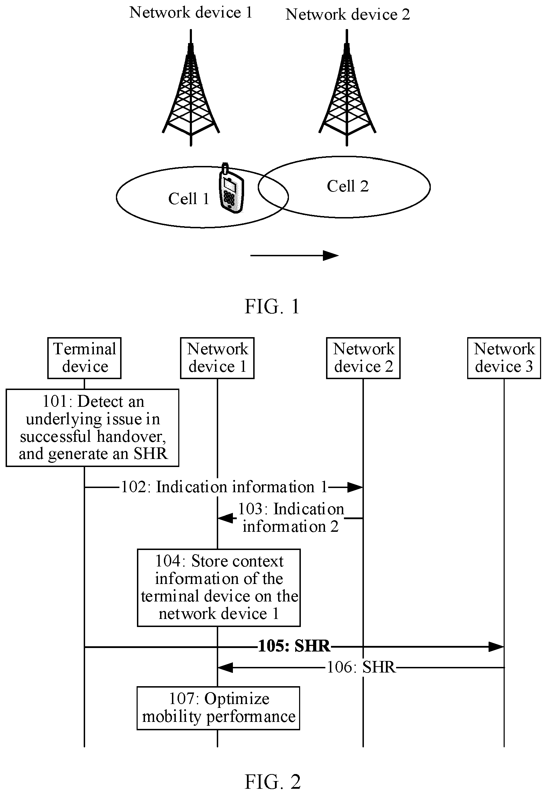

FIG. 1 is an application scenario according to an embodiment of this application. A terminal device moves from a coverage area of a network device 1 to a coverage area of a network device 2. To maintain communication continuity, the terminal device is handed over from a cell 1 of the network device 1 to a cell 2 of the network device 2. The network device 1 may be referred to as a source network device, and the cell 1 may be referred to as a source cell. Correspondingly, the network device 2 may be referred to as a target network device, and the cell 2 may be referred to as a target cell. The application scenario is applicable to various wireless communication systems, for example: a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G system, or a new radio (new radio, NR) system. Even if a current handover procedure is successful, there may be still an underlying issue in successful handover. For example, when the terminal device is handed over to the cell 2, measured signal quality of the cell 2, such as reference signal received power (reference signal received power, RSRP), is slightly higher than a signal quality threshold for triggering handover. For another example, a quantity of random access (random access, RA) attempts of the terminal device to access the cell 2 before the terminal device is handed over to the cell 2 is close to a maximum quantity of RA attempts that is configured. In this case, even if current handover is successful, another terminal device served by the source network device may fail to perform handover subsequently. That the terminal device records and sends mobility-related information in a current handover process to a network side is considered to be introduced. The mobility-related information may be carried in a successful handover report (successful handover report, SHR). Specific content of the mobility-related information carried in the SHR is described below by using an example with reference to a specific embodiment. After obtaining the SHR, the network device 1 may optimize mobility performance on the network device 1 with reference to context information that is of the terminal device on the network device 1 and that is retained in the network device 1. Context of the terminal device is usually a link established between the terminal device and a corresponding network device. The context information of the terminal device on the network device 1 includes authentication information of the terminal device, a network capability of the terminal device, and the like. Particularly, the context information of the terminal device on the network device 1 in this embodiment of this application further includes mobility configuration information related to the terminal device. The mobility configuration information related to the terminal device is also described below by using an example with reference to a specific embodiment.

However, after generating the SHR, the terminal device may not send the SHR to a currently connected network device such as the network device 2 in time due to a delay problem. When the network device 1 finally obtains the SHR, because the terminal device has moved out from the cell 1 of the network device 1, the network device 1 may have deleted the context information that is of the terminal device on the network device 1 and that is originally retained in the network device 1. As a result, the network device 1 cannot determine the foregoing mentioned underlying issue, and cannot optimize mobility performance accordingly.

In view of this, in embodiments of this application, the context information of the terminal device on a source network device side is stored in time, so that the source network device can locate, after obtaining the SHR, the underlying issue in successful handover in combination with the SHR, and optimize mobility performance.

### Embodiment 1

FIG. 2 is an interaction flowchart of a mobility performance optimization method according to an embodiment of this application. The method may be applied to the scenario in FIG. 1. The technical solution is applicable to any handover procedure mentioned above.

101: A terminal device detects an underlying issue in successful handover based on handover from a cell 1 of a network device 1 to a cell 2 of a network device 2, and generates an SHR.

A terminal device detecting an underlying issue in successful handover may also be expressed as that the terminal device detects a potential failure (potential failure). For a specific issue, refer to the foregoing related descriptions. The terminal device generates the SHR based on the handover from the cell 1 of the network device 1 to the cell 2 of the network device 2, or the SHR corresponds to a handover procedure of the handover from the cell 1 of the network device 1 to the cell 2 of the network device 2.

In an implementation, the terminal device stores the SHR, and waits to subsequently send the SHR to a network device connected to the terminal device. Due to uncertainty of a moment at which the SHR is sent, when the terminal device sends the SHR, the network device connected to the terminal device may still be the network device 2. Alternatively, the terminal device may perform at least one handover procedure after a current handover procedure, and is connected to a cell 3 of a network device 3. Based on this, in this embodiment of this application, when the terminal device sends the SHR, the network device connected to the terminal device, that is, the network device that receives the SHR sent by the terminal device, is the network device 3, which may also be referred to as a receiving network device. In some scenarios, when a terminal device 2 does not subsequently move out from a cell managed by the network device 2, the network device 2 and the network device 3 are a same network device.

The SHR generated by the terminal device may include information about the terminal device, for example, an identifier of the terminal device on a source network device or a target network device, and may further include at least one of identification information of the network device 1, identification information of the cell 1 of the network device 1, identification information of the network device 2, identification information of the cell 2 of the network device 2.

102: The terminal device sends indication information 1 to the network device 2.

The indication information 1 indicates that the terminal device generates the SHR based on the handover from the cell 1 of the network device 1 to the cell 2 of the network device 2, that is, indicates existence of the SHR, or indicates that the underlying issue in successful handover is detected when the terminal device is handed over from the cell 1 of the network device 1 to the cell 2 of the network device 2.

In an implementation, after completing steps of timing synchronization with the cell 2 and radio resource control (radio resource control, RRC) handover, the terminal device includes the indication information 1 in RRC configuration complete RRCconfigurationComplete sent to the network device 2.

In some implementations, the terminal device may undergo a plurality of handover procedures in a communication process, and generate a plurality of different SHRs respectively corresponding to at least some of the plurality of handover procedures. The terminal device stores the SHRs and waits for subsequent sending.

In an implementation, in the current handover procedure, when the terminal device stores an SHR, regardless of whether the SHR is generated based on the current handover procedure (if not specifically specified below, the current handover procedure is the handover from the cell 1 of the network device 1 to the cell 2 of the network device 2), the terminal device indicates, to the network device 2, that the terminal device has a to-be-sent SHR.

To determine whether a subsequent step needs to be performed, a handover procedure corresponding to one or more SHRs needs to be distinguished. Specifically, at least one of the following manners may be used.

### Manner 1:

The indication information 1 includes a first field, indicating whether the SHR generated in the current handover procedure exists in an SHR to be sent by the terminal device to the network device 3.

In an implementation, if the SHR generated in the current handover procedure exists in the SHR to be sent by the terminal device to the network device 3, the subsequent step in this embodiment of this application is performed.

### Manner 2:

The indication information 1 includes a second field, indicating time information of a handover procedure corresponding to the SHR stored in the terminal device. The network device 2 may determine, based on this, whether the SHR generated in the current handover procedure exists in the SHR to be sent by the terminal device to the network device 3.

Similarly, in an implementation, if the SHR generated in the current handover procedure exists in the SHR to be sent by the terminal device to the network device 3, the subsequent step in this embodiment of this application is performed.

### Manner 3:

The indication information 1 includes a third field, indicating a source cell identifier corresponding to the SHR stored in the terminal device.

The network device 2 may determine, based on this, whether the SHR generated in the current handover procedure exists in the SHR to be sent by the terminal device to the network device 3.

Similarly, in an implementation, if the SHR generated in the current handover procedure exists in the SHR to be sent by the terminal device to the network device 3, the subsequent step in this embodiment of this application is performed.

In step 102, sending to the network device 2 to which the terminal device is currently handed over is usually performed after the terminal device generates the SHR. In other words, the network device 2 can learn in time that the terminal device generates the SHR in the current handover.

103: The network device 1 receives indication information 2 sent by the network device 2, where the indication information 2 indicates that the terminal device generates the SHR based on the handover from the cell 1 of the network device 1 to the cell 2 of the network device 2.

As described above, the SHR in the current handover procedure may not be sent to the network device 1 in time. In other words, it cannot be ensured that the source network device, that is, the network device 1, in the current handover procedure does not delete context information of the terminal device on the network device 1 before receiving the SHR. Therefore, this step needs to be introduced to indicate or remind the network device 1 that although the current handover is successful, there is the underlying issue in successful handover. The network device 1 needs to perform an operation of 104 based on the indication information 2.

104: The network device 1 stores the context information of the terminal device on the network device 1 based on the indication information 2.

When the network device 1 learns that the terminal device generates the SHR in the current handover procedure, the network device 1 stores the context information of the terminal device on the network device 1 in time, and does not delete the context information, so that the network device 1 optimizes, after subsequently receiving the SHR, mobility performance in combination with the SHR.

As mentioned above, the context information of the terminal device on the network device 1 includes mobility configuration information related to the terminal device. The mobility configuration information related to the terminal device may include at least one of handover threshold information, handover offset information, hysteresis information, and handover resource information. The handover threshold information may be understood as a threshold value for triggering handover of the terminal device to a target cell of the target network device in a specific case, for example, an RSRP threshold corresponding to each event in handover. The handover offset information may be understood as a frequency conversion offset of handover, and indicates an offset value for quality of a target cell relative to that of a source cell in a handover scenario. A larger value indicates that handover may be initiated when the target cell has better signal quality. In other words, the handover offset information may be used to assist the handover threshold information to control triggering of a handover procedure. The hysteresis information is used to adjust various handover thresholds to help reduce or avoid a ping-pong effect in a handover process. The handover resource information may include information such as a resource used upon attempted access to the target cell. Particularly, in a CHO procedure, the mobility configuration information related to the terminal device may include candidate cell information for CHO, access resource information of a candidate cell, trigger condition information of the CHO, and the like. In an implementation, the trigger condition information of the CHO is at least one of handover threshold information, handover offset information, and hysteresis information in the CHO procedure. The candidate cell information for the CHO is a cell global identifier (cell global identifier, CGI) of each candidate cell, or a physical cell identifier (physical cell identifier, PCI) of each candidate cell and frequency information corresponding to the candidate cell. It should be noted that, events in the foregoing handover include events related to common handover such as A3, A5, and A6. The A3 event is used to determine whether serving quality of a neighboring cell is better than that of a serving cell, the A5 event is used to determine whether serving quality of a serving cell is worse than a threshold or whether serving quality of a neighboring cell is better than a threshold, and the A6 event is used to determine whether serving quality of a neighboring cell is better than that of a secondary cell. In the CHO procedure, events such as A3 and A5 may be included, but the A6 event is not included.

105: The terminal device sends the SHR to the network device 3.

After step 101, the terminal device sends the SHR generated in the current handover procedure to the network device 3 that is currently connected. As described in the foregoing step 101, the network device 3 may be the network device 2. Delay time may exist between step 101 and step 105.

106: The network device 3 sends the SHR to the network device 1.

Correspondingly, in step 106, the network device 1 may obtain the SHR generated by the terminal device in the current handover procedure.

107: The network device 1 optimizes the mobility performance based on the context information of the terminal device on the network device 1 and the SHR.

In step 107, the network device 1 may locate an underlying issue in the current handover procedure with reference to the context information of the terminal device on the network device 1 and the SHR, to optimize a related mobility parameter accordingly.

Specifically, in an implementation, the mobility configuration information in step 104 includes at least one of resource information used by the terminal device to access the cell 2, a maximum quantity of RA attempts that is configured to access the cell 2, and a handover threshold for triggering handover to the cell 2, and the SHR includes a corresponding quantity of RA attempts of the terminal device to access the cell 2. Assuming that the quantity of RA attempts is close to the maximum quantity of RA attempts that is configured to access the cell 2, the network device 1 may perform at least one of the following operations accordingly: adjusting an allocated resource for accessing the cell 2, adjusting the maximum quantity of RA attempts that is configured to access the cell 2, and adjusting the handover threshold for triggering handover to the cell 2.

In another implementation, the handover threshold information in the mobility configuration information in step 104 includes handover threshold information for triggering handover to the cell 2, and the SHR includes signal quality information of the target cell that is obtained after the terminal device accesses the cell 2. Assuming that the signal quality information is poor, the network device 1 may perform adjustment accordingly, for example, increase the handover threshold for accessing the cell 2.

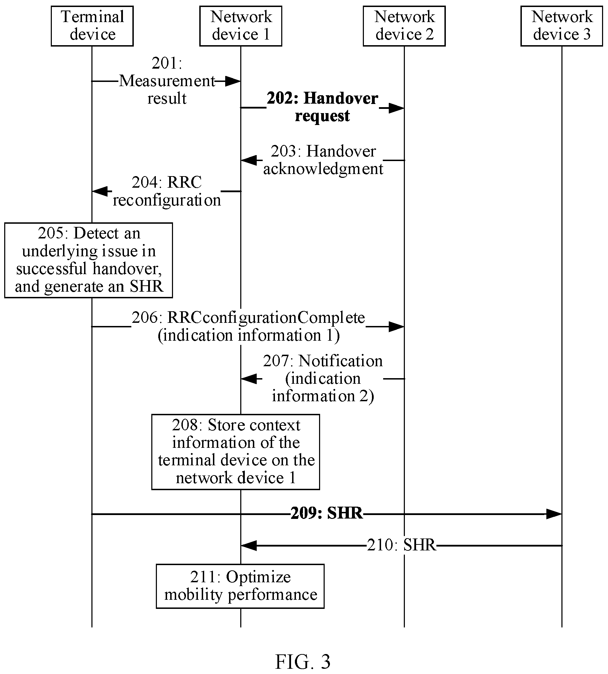

FIG. 3 is an interaction flowchart of another mobility performance optimization method according to an embodiment of this application. A core idea of the method is consistent with the technical solution described in FIG. 2, and is a more complete technical solution based on FIG. 2, and specific signaling corresponding to some steps is disclosed. In addition, this technical solution is illustrated by using a common handover procedure as an example.

201: A terminal device sends a measurement result for a neighboring cell to a network device 1.

The network device 1 configures related measurement information for handover for the terminal device, and the terminal device performs reporting to the network device 1 after completing measurement.

202: The network device 1 sends a handover request to a network device 2.

When a handover condition is met, the network device 1 sends the handover request HO request to the network device 2, to request to hand over the terminal device from a cell 1 of the network device 1 to a cell 2 of the network device 2. The HO request may include at least one of an identifier of the cell 2, a cell radio network temporary identifier (cell radio network temporary identifier, C-RNTI) of the terminal device on the network device 1, a capability of the terminal device based on different radio access technologies (radio access technologies, RATs), and the like.

203: The network device 2 sends a handover acknowledgment to the network device 1.

The handover acknowledgment HO acknowledge is HO ACK. In an implementation, in a DAPS handover procedure, the HO acknowledge may further include information about whether the network device 2 agrees to perform DAPS handover.

204: The network device 1 performs RRC reconfiguration on the terminal device.

Content of the RRC reconfiguration mainly includes information related to accessing the cell 2 of the network device 2, for example, the identifier of the cell 2, a new C-RNTI subsequently used by the terminal device, and resource information for accessing the cell 2.

205: The terminal device detects an underlying issue in successful handover based on handover from the cell 1 of the network device 1 to the cell 2 of the network device 2, and generates an SHR.

206: The terminal device sends RRCconfigurationComplete to the network device 2, where RRCconfigurationComplete carries indication information 1.

207: The network device 1 receives a notification notification sent by the network device 2, where the notification carries indication information 2.

The indication information 2 may also be referred to as an SHR indicator (indicator).

208: The network device 1 stores context information of the terminal device on the network device 1.

209: The terminal device sends the SHR to a network device 3.

210: The network device 3 sends the SHR to the network device 1.

211: The network device 1 optimizes mobility performance based on the stored context information of the terminal device on the network device 1 and the SHR.

For detailed descriptions of steps 205 to 211, refer to steps 101 to 107. Details are not described herein again.

According to the technical solution provided in this embodiment of this application, a target network device sends an indication to a source network device in time when receiving an indication that the terminal device generates the SHR in current handover, so that the source network device can store the context information of the terminal device on the source network device in time, and combine the context information and the SHR to optimize the mobility performance after receiving the SHR subsequently. Therefore, mobility performance of a communication system is improved. In addition, storing is directly performed on a source network device side, so that unnecessary signaling overheads can be effectively reduced.

### Embodiment 2

In Embodiment 1, the source network device stores, based on an indication of the target network device, the context information of the terminal device on the network device 1 in the current handover procedure in time, to ensure mobility performance optimization based on the underlying issue in successful handover. In this embodiment, the target network device stores the context information of the terminal device on the source network device based on the indication that is sent by the terminal device to indicate that the SHR is generated in the current handover procedure, and subsequently sends the context information to the source network device for mobility performance optimization of the underlying issue in successful handover.

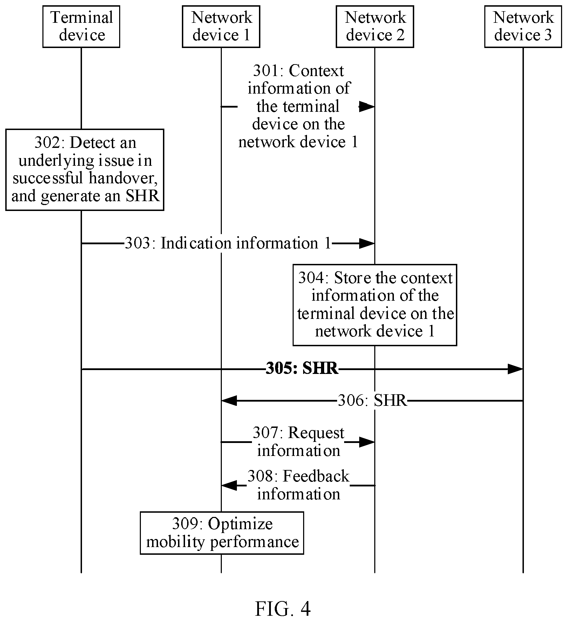

FIG. 4 is an interaction flowchart of still another mobility performance optimization method according to an embodiment of this application. The method may be applied to the scenario in FIG. 1. The technical solution is applicable to any handover procedure other than the CHO handover mentioned above. It should be noted that, unless otherwise specified, meanings of network devices in Embodiment 2 are consistent with those in Embodiment 1, and details are not described herein again.

301: A network device 1 sends context information of a terminal device on the network device 1 to a network device 2.

The network device 1 determines to hand over the terminal device from a cell 1 of the network device 1 to a cell 2 of the network device 2. Because the network device 1 has not deleted the context information of the terminal device on the network device 1 at present, the network device 1 sends the context information of the terminal device on the network device 1 to the network device 2, to request the context information from the network device 2 in case of needing to use the context information subsequently. In an implementation, the network device 1 includes the context information of the terminal device on the network device 1 in an HO request, and sends the HO request to the network device 2.

In an implementation, because whether the terminal device generates an SHR based on a current handover procedure (if not specifically specified below, the current handover procedure is handover from the cell 1 of the network device 1 to the cell 2 of the network device 2) cannot be determined at present, the context information of the terminal device on the network device 1 may not need to be stored temporarily.

302: The terminal device detects an underlying issue in successful handover based on the handover from the cell 1 of the network device 1 to the cell 2 of the network device 2, and generates the SHR.

For detailed descriptions of this step, refer to step 101 in Embodiment 1.

303: The terminal device sends indication information 1 to the network device 2.

For detailed descriptions of this step, refer to step 102 in Embodiment 1.

304: The network device 2 stores the context information of the terminal device on the network device 1 based on the indication information 1.

When the network device 2 learns, based on the indication information 1 in step 303, that the SHR is generated in the current handover procedure, the network device 2 stores the context information of the terminal device on the network device 1, to subsequently feed back the context information to the network device 1.

In an implementation, after step 304 is performed and the terminal device successfully accesses the cell 2, the network device 2 indicates the network device 1 to release context of the terminal device on the network device 1.

For specific content of the context information of the terminal device on the network device 1, refer to step 104 in Embodiment 1.

305: The terminal device sends the SHR to a network device 3.

For detailed descriptions of this step, refer to step 105 in Embodiment 1.

306: The network device 3 sends the SHR to the network device 1.

For detailed descriptions of this step, refer to step 106 in Embodiment 1.

307: The network device 1 sends request information to the network device 2, where the request information requests the context information of the terminal device on the network device 1.

Before receiving the SHR, the network device 1 has locally deleted the context information of the terminal device on the network device 1. Therefore, to optimize mobility performance, this step needs to be performed.

In an implementation, the network device 1 sends the request information to the network device 2 based on information about the terminal device included in the SHR. A request message includes at least one of the following information: information about a source cell, namely, the cell 1, information about a target cell, namely, the cell 2, and information about the terminal device. For example, the information about the cell 1 or the cell 2 may include frequency information and a PCI of the cell 1 or the cell 2, or a CGI of the cell 1 or the cell 2. For example, the information about the terminal device may be a C-RNTI of the terminal device on a source network device and/or a C-RNTI of the terminal device on a target network device. Optionally, the request message may further include time information of the current handover procedure. The time information of the current handover procedure is used by the network device 2 to determine time at which the terminal device accesses the network device 2, so that the network device 2 quickly locates the context information that is of the terminal device on the network device 1 and that is requested by the network device 1.

308: The network device 2 sends feedback information to the network device 1, where the feedback information is used to feed back the context information of the terminal device on the network device 1.

The network device 2 sends the stored context information of the terminal device on the network device 1 in step 304 to the network device 1.

309: The network device 1 optimizes the mobility performance based on the context information of the terminal device on the network device 1 and the SHR.

For detailed descriptions of this step, refer to step 107 in Embodiment 1.

In some implementations, before step 301 in this embodiment, step 201 in the technical solution shown in FIG. 3 in Embodiment 1 may be further included, and steps 202 and 203 may be further included between step 301 and step 302. For specific descriptions, refer to related descriptions in Embodiment 1.

The technical solution in this embodiment of this application, as described at the beginning of Embodiment 2, can also achieve beneficial effects of optimizing the mobility performance on the source network device when the SHR is generated in a handover process.

### Embodiment 3

The technical solution provided in Embodiment 3 is similar to that of Embodiment 2. Particularly, when the technical solution is applied to a CHO scenario, a source network device sends context information of a terminal device on the source network device to a target network device to which CHO handover succeeds. The target network device stores, based on an indication that is sent by the terminal device to indicate that an SHR is generated in a current handover procedure, the context information of the terminal device on the source network device, and subsequently sends the context information to the source network device for mobility performance optimization of an underlying issue in successful handover.

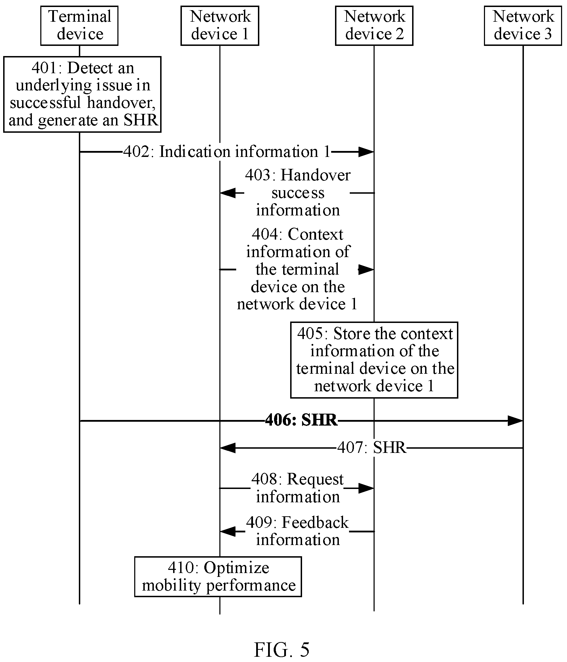

FIG. 5 shows yet another mobility performance optimization method according to an embodiment of this application. The method may be applied to the scenario in FIG. 1. This technical solution is applicable to a CHO handover procedure. It should be noted that, unless otherwise specified, meanings of network devices in Embodiment 3 are consistent with those in Embodiment 1, and details are not described herein again.

401: A terminal device detects an underlying issue in successful handover based on handover from a cell 1 of a network device 1 to a cell 2 of a network device 2, and generates an SHR.

For detailed descriptions of this step, refer to step 101 in Embodiment 1.

402: The terminal device sends indication information 1 to the network device 2.

For detailed descriptions of this step, refer to step 102 in Embodiment 1.

403: The network device 2 sends handover success information to the network device 1.

The handover success information indicates that the terminal device successfully accesses the cell 2 of the network device 2 in a plurality of candidate cells. Based on this, the network device 1 may determine that a target cell of a target base station to which the terminal device is successfully handed over in a current handover procedure is the cell 2 of the network device 2. The network device may further indicate, by using the message, the network device 1 to release context information of the terminal device on the network device 1.

404: The network device 1 sends the context information of the terminal device on the network device 1 to the network device 2.

Before deleting the context information of the terminal device on the network device 1, the network device 1 needs to send the context information of the terminal device on the network device 1 to the network device 2.

Particularly, in the CHO procedure, the context information of the terminal device on the network device 1 includes the mobility configuration information related to the terminal device that is related to the CHO procedure in step 104 in Embodiment 1. For example, the mobility configuration information may include candidate cell information for CHO, access resource information of a candidate cell, and trigger condition information of the CHO. In an implementation, the candidate cell information for the CHO is a CGI of each candidate cell, or a PCI of each candidate cell and frequency information corresponding to the candidate cell.

405: The network device 2 stores the context information of the terminal device on the network device 1 based on the indication information 1.

For detailed descriptions of this step, refer to step 304 in Embodiment 1.

406: The terminal device sends the SHR to a network device 3.

For detailed descriptions of this step, refer to step 105 in Embodiment 1.

407: The network device 3 sends the SHR to the network device 1.

For detailed descriptions of this step, refer to step 106 in Embodiment 1.

408: The network device 1 sends request information to the network device 2, where the request information requests the context information of the terminal device on the network device 1.

For detailed descriptions of this step, refer to step 307 in Embodiment 2.

409: The network device 2 sends feedback information to the network device 1, where the feedback information is used to feed back the context information of the terminal device on the network device 1.

The network device 2 resends the stored context information of the terminal device on the network device 1 in step 304 to the network device 1.

410: The network device 1 optimizes mobility performance based on the context information of the terminal device on the network device 1 and the SHR.

For detailed descriptions of this step, refer to step 107 in Embodiment 2.

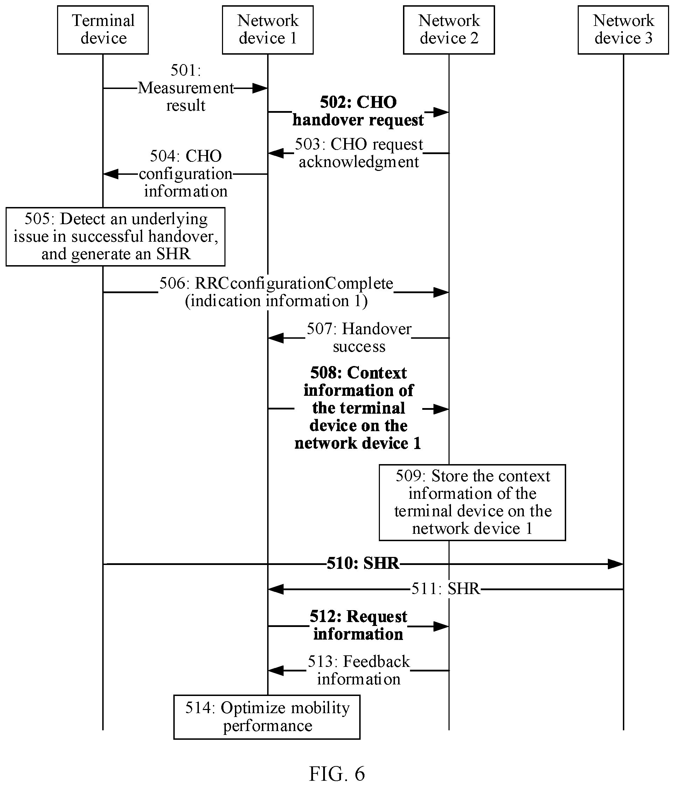

FIG. 6 is an interaction flowchart of still yet another mobility performance optimization method according to an embodiment of this application. A core idea of the method is consistent with the technical solution described in FIG. 5, and is a more complete technical solution based on FIG. 5. In addition, specific signaling corresponding to some steps is disclosed.

501: A terminal device sends a measurement result for a neighboring cell to a network device 1.

For detailed descriptions of this step, refer to step 201 in Embodiment 1.

502: The network device 1 sends a CHO request CHO request to a network device 2.

The network device 1 may send the CHO request to network devices corresponding to a plurality of candidate cells that meet a CHO trigger condition, and the network device 2 is one of the network devices.

503: The network device 2 sends a CHO request acknowledgment CHO request acknowledge to the network device 1.

The network device 2 receives the CHO request of the network device 1, and feeds back the CHO request acknowledge.

504: The network device 1 sends CHO configuration information to the terminal device.

The CHO configuration information is the mobility configuration information related to the terminal device in a CHO scenario in step 104, to be specific, candidate cell information, access resource information of a candidate cell, and trigger condition information of CHO.

505: The terminal device detects an underlying issue in successful handover based on handover from a cell 1 of the network device 1 to a cell 2 of the network device 2, and generates an SHR.

506: The terminal device sends RRCconfigurationComplete to the network device 2, where RRCconfigurationComplete carries indication information 1.

507: The network device 2 sends handover success HO success to the network device 1.

Because the network device 1 previously sends the CHO request to the network devices corresponding to the plurality of candidate cells that meet the CHO trigger condition, the network device 1 does not know a specific cell to which the terminal device is finally handed over. After this step is performed, the network device 1 can determine that the terminal device accesses the cell 2 of the network device 2.

For other descriptions of this step, refer to step 403 in this embodiment.

508: The network device 1 sends context information of the terminal device on the network device 1 to the network device 2.

509: The network device 2 stores the context information of the terminal device on the network device 1 based on the indication information 1.

510: The terminal device sends the SHR to a network device 3.

511: The network device 3 sends the SHR to the network device 1.

512: The network device 1 sends request information to the network device 2, where the request information requests the context information of the terminal device on the network device 1.

513: The network device 2 sends feedback information to the network device 1, where the feedback information is used to feed back the context information of the terminal device on the network device 1.

514: The network device 1 optimizes mobility performance based on the context information of the terminal device on the network device 1 and the SHR.

For detailed descriptions of steps 508 to 514, refer to the foregoing steps 404 to 410. Details are not described herein again.

The technical solution in this embodiment of this application, as described at the beginning of Embodiment 3, can also achieve beneficial effects of optimizing the mobility performance on a source network device when the SHR is generated in a handover process.

In the foregoing embodiments provided in this application, the communication method provided in embodiments of this application is described from a perspective of a source network device, a target network device, a terminal device, and a receiving network device being execution bodies. To implement functions in the communication method provided in embodiments of this application, the foregoing devices may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

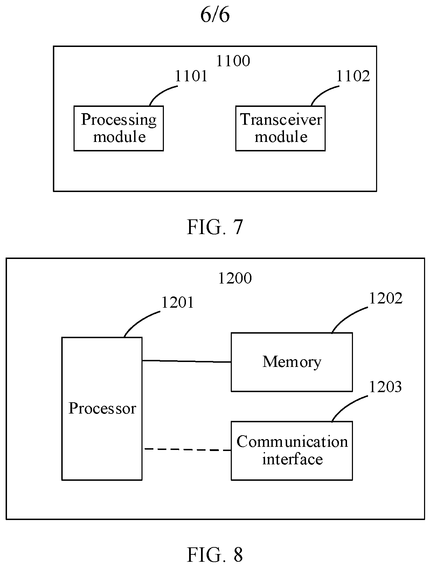

Same as the foregoing idea, as shown in FIG. 7, an embodiment of this application further provides a communication apparatus 1100. The communication apparatus 1100 includes a transceiver module 1101 and a processing module 1102.

In an example, the communication apparatus 1100 is configured to implement a function of the network device 1, the network device 2, the terminal device, or the network device 3 in the methods in the foregoing Embodiment 1 to Embodiment 3 of this application. The apparatus may be the network device 1, the network device 2, the terminal device, or the network device 3, or may be an apparatus in the network device 1, the network device 2, the terminal device, or the network device 3. The apparatus may be a chip system. In this embodiment of this application, the chip system may include a chip, or may include the chip and another discrete component.

For example, when the communication apparatus 1100 is configured to implement a function of the network device 1, the transceiver module 1101 is configured to receive indication information from the network device 2, where the indication information indicates the terminal device to generate an SHR based on handover from a cell 1 of the network device 1 to a cell 2 of the network device 2. The processing module 1102 is configured to store context information of the terminal device on the network device 1 based on the indication information. The transceiver module 1101 is further configured to receive the SHR from the network device 3. The processing module 1102 is further configured to optimize mobility performance based on the context information of the terminal device on a first network device and the SHR.

For another example, when the communication apparatus 1100 is configured to implement a function of the network device 1, the transceiver module 1101 is configured to: send context information of the terminal device on the network device 1 to the network device 2; receive an SHR from the network device 3, where the SHR is generated by the terminal device based on handover from a cell 1 of the network device 1 to a cell 2 of the network device 2; send request information to the network device 2, where the request information requests the context information of the terminal device on a first network device; and receive feedback information from the network device 2, where the feedback information is used to feed back the context information of the terminal device on the network device 1. The processing module 1102 is configured to optimize mobility performance based on the context information of the terminal device on the network device 1 and the SHR.

For still another example, when the communication apparatus 1100 is configured to implement a function of the network device 2, the processing module 1102 is configured to: control the transceiver module 1101 to receive first indication information from the terminal device, where the first indication information indicates that the terminal device generates an SHR based on handover from a cell 1 of the network device 1 to a cell 2 of the network device 2; and send second indication information to the network device 1, where the second indication information indicates the SHR.

For yet another example, when the communication apparatus 1100 is configured to implement a function of the network device 2, the transceiver module 1101 is configured to receive context information of the terminal device on the network device 1 from the network device 1. The processing module 1102 is configured to store the context information of the terminal device on the network device 1. The transceiver module 1101 is further configured to send feedback information to the network device 3, where the feedback information is used to feed back the context information of the terminal device on the network device 1.

For still yet another example, when the communication apparatus 1100 is configured to implement a function of the terminal device, the processing module 1102 is configured to: detect an underlying issue in successful handover based on handover from a cell 1 of the network device 1 to a cell 2 of the network device 2, and generate an SHR. The transceiver device 1101 is configured to send indication information 1 to the network device 2, where the indication information 1 indicates the terminal device to generate the SHR based on the handover from the cell 1 of the network device 1 to the cell 2 of the network device 2. In an implementation, the indication information 1 includes a field indicating a handover procedure corresponding to the SHR.

For more detailed descriptions of the transceiver module 1101 and the processing module 1102, refer to records in the foregoing Embodiment 1 to Embodiment 3.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Same as the foregoing idea, as shown in FIG. 8, an embodiment of this application further provides a communication apparatus 1200.

In an example, the communication apparatus 1200 is configured to implement a function of the network device 1, the network device 2, the terminal device, or the network device 3 in the methods in the foregoing Embodiment 1 to Embodiment 3 of this application. The apparatus may be the network device 1, the network device 2, the terminal device, or the network device 3, or may be an apparatus in the network device 1, the network device 2, the terminal device, or the network device 3. The communication apparatus 1200 includes at least one processor 1201, configured to implement a function of the terminal device in the foregoing methods. For details, refer to detailed descriptions in the methods. Details are not described herein again.

In some embodiments, the communication apparatus 1200 may further include at least one memory 1202, configured to store program instructions and/or data. The memory 1202 is coupled to the processor 1201. Couplings in this embodiment of this application are indirect couplings or communication connections between apparatuses, units, or modules, may be implemented in an electrical form, a mechanical form, or another form, and are used for information exchange between the apparatuses, the units, or the modules. In another implementation, the memory 1202 may alternatively be located outside the communication apparatus 1200. The processor 1201 may cooperate with the memory 1202. The processor 1201 may execute the program instructions stored in the memory 1202, to perform the method in the foregoing embodiments of this application. At least one of the at least one memory may be included in the processor.

In some embodiments, the communication apparatus 1200 may further include a communication interface 1203, configured to communicate with another device through a transmission medium, so that an apparatus used in the communication apparatus 1200 can communicate with the another device. For example, the communication interface 1203 may be a transceiver, a circuit, a bus, a module, or another type of communication interface, and the another device may be a network device. The processor 1201 receives and sends data through the communication interface 1203, and is configured to perform the method in the foregoing embodiments.

In some embodiments, the communication apparatus 1200 may further include at least one memory 1202, configured to store program instructions and/or data. The memory 1202 is coupled to the processor 1201. Couplings in this embodiment of this application are indirect couplings or communication connections between apparatuses, units, or modules, may be implemented in an electrical form, a mechanical form, or another form, and are used for information exchange between the apparatuses, the units, or the modules. In another implementation, the memory 1202 may alternatively be located outside the communication apparatus 1200. The processor 1201 may cooperate with the memory 1202. The processor 1201 may execute the program instructions stored in the memory 1202. At least one of the at least one memory may be included in the processor.

In some embodiments, the communication apparatus 1200 may further include a communication interface 1203, configured to communicate with another device through a transmission medium, so that an apparatus used in the communication apparatus 1200 can communicate with the another device. For example, the communication interface 1203 may be a transceiver, a circuit, a bus, a module, or another type of communication interface, and the another device may be a terminal device. The processor 1201 receives and sends data through the communication interface 1203, and is configured to perform the method in the foregoing embodiments.

In this embodiment of this application, a specific connection medium among the communication interface 1203, the processor 1201, and the memory 1202 is not limited. For example, the memory 1202, the processor 1201, and the communication interface 1203 in this embodiment of this application may be connected through a bus. The bus may be classified into an address bus, a data bus, a control bus, and the like.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, such as a hard disk drive (hard disk drive, HDD) or a solid-state drive (solid-state drive, SSD), or may be a volatile memory (volatile memory), such as a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

All or some of the methods in embodiments of this application may be implemented by using software, hardware, firmware, or any combination thereof. When software is used to implement the methods, all or some of the methods may be implemented in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. Therefore, this application is intended to cover these modifications and variations of this application if they fall within the scope of claims of this application and equivalent technologies thereof.

## Claims

1. A mobility performance optimization method, comprising:
receiving indication information from a second network device, wherein the indication information indicates a terminal device to generate a successful handover report SHR based on handover from a first cell of a first network device to a second cell of the second network device;
storing context information of the terminal device on the first network device based on the indication information;
receiving the SHR from a third network device, wherein the third network device is a network device connected to the terminal device when the terminal device sends the SHR; and
optimizing mobility performance based on the context information of the terminal device on the first network device and the SHR.

2. A mobility performance optimization method, comprising:
sending context information of a terminal device on a first network device to a second network device;
receiving a successful handover report SHR from a third network device, wherein the SHR is generated by the terminal device based on handover from a first cell of the first network device to a second cell of the second network device, and the third network device is a network device connected to the terminal device when the terminal device sends the SHR;
sending request information to the second network device, wherein the request information requests the context information of the terminal device on the first network device;
receiving feedback information from the second network device, wherein the feedback information is used to feed back the context information of the terminal device on the first network device; and
optimizing mobility performance based on the context information of the terminal device on the first network device and the SHR.

3. The method according to claim 2, further comprising:
receiving handover success information from the second network device, wherein the handover success information indicates that the terminal device is successfully handed over to the second cell.

4. The method according to claim 2 or 3, wherein the request information comprises information about the terminal device.

5. The method according to claim 4, wherein the request information further comprises at least one of information about the first network device, information about the second cell, and time information of a handover procedure.

6. The method according to any one of claims 1 to 5, wherein the context information of the terminal device on the first network device comprises mobility configuration information related to the terminal device.

7. The method according to claim 6, wherein the mobility configuration information comprises at least one of handover threshold information, handover resource information, handover offset information, and hysteresis information; or
the mobility configuration information comprises conditional handover configuration information.

8. The method according to claim 7, wherein the conditional handover configuration information comprises conditional handover candidate cell information and conditional handover trigger condition information.

9. The method according to any one of claims 1 to 8, wherein the SHR comprises the information about the first network device.

10. The method according to any one of claims 1 to 9, wherein the third network device and the second network device are a same network device.

11. The method according to any one of claims 6 to 10, wherein the mobility configuration information comprises at least one of resource information used by the terminal device to access the second cell, a maximum quantity of random access attempts that is configured, and a handover threshold, and the SHR comprises a quantity of random access attempts of the terminal device to access the second cell; and
the optimizing mobility performance based on the context information of the terminal device on the first network device and the SHR comprises: determining, based on the quantity of random access attempts, to adjust at least one of the following: an allocated resource for accessing the cell, the maximum quantity of random access attempts that is configured, and the handover threshold.

12. The method according to any one of claims 7 to 11, wherein the handover threshold information comprises the handover threshold of accessing the second cell by the terminal device, and the SHR comprises channel quality information of the second cell obtained after the terminal device accesses the second cell; and
the optimizing mobility performance based on the context information of the terminal device on the first network device and the SHR comprises: determining to adjust the handover threshold based on the channel quality information of the second cell.

13. An information indication method, comprising:
receiving first indication information from a terminal device, wherein the first indication information indicates that the terminal device generates a successful handover report SHR based on handover from a first cell of a first network device to a second cell of a second network device; and
sending second indication information to the first network device, wherein the second indication information indicates the SHR.

14. An information indication method, comprising:
receiving, from a first network device, context information of a terminal device on the first network device;
storing the context information of the terminal device on the first network device;
receiving request information from the first network device, wherein the request information requests the context information of the terminal device on the first network device; and
sending feedback information to a third network device, wherein the feedback information is used to feed back the context information of the terminal device on the first network device.

15. The method according to claim 14, further comprising:
receiving indication information sent by the terminal device, wherein the indication information indicates that the terminal device generates a successful handover report SHR based on handover from a first cell of the first network device to a second cell of a second network device.

16. The method according to claim 15, wherein the indication information comprises handover information corresponding to the SHR.

17. The method according to any one of claims 14 to 16, further comprising:
sending handover success information to the first network device, wherein the handover success information indicates that the terminal device is successfully handed over to the second cell.

18. The method according to any one of claims 14 to 17, wherein the request information comprises information about the terminal device.

19. The method according to claim 18, wherein the request information further comprises at least one of information about the first network device, information about the second cell, and time information of the handover.

20. The method according to any one of claims 13 to 19, wherein the context information of the terminal device on the first network device comprises mobility configuration information related to the terminal device.

21. The method according to claim 20, wherein the mobility configuration information comprises at least one of handover threshold information, handover resource information, handover offset information, and hysteresis information; or
the mobility configuration information comprises conditional handover configuration information.

22. The method according to claim 21, wherein the conditional handover configuration information comprises conditional handover candidate cell information and conditional handover trigger condition information.

23. The method according to any one of claims 13 to 22, wherein the SHR comprises the information about the first network device.

24. The method according to any one of claims 13 to 23, further comprising:
receiving the SHR from the terminal device; and
sending the SHR to the first network device.

25. A communication apparatus, comprising a unit or a module configured to implement the method according to any one of claims 1 to 12.

26. A communication apparatus, comprising a unit or a module configured to implement the method according to any one of claims 13 to 24.

27. A communication apparatus, comprising a processor and a memory, wherein the memory stores instructions, and when the processor executes the instructions, the apparatus is enabled to perform the method according to any one of claims 1 to 12.

28. A communication apparatus, comprising a processor and a memory, wherein the memory stores instructions, and when the processor executes the instructions, the apparatus is enabled to perform the method according to any one of claims 13 to 24.

29. A computer-readable storage medium, wherein the computer-readable storage medium stores instructions, and when the instructions are run on a computer, the computer is enabled to perform the method according to any one of claims 1 to 24.

30. A communication system, comprising the communication apparatus according to claim 27 or claim 28.
